# EUROPÄISCHE PATENTANMELDUNG

(11) **EP 4 843 721 A1**
(43) Veröffentlichungstag der Anmeldung: **25.11.2026**
(21) Anmeldenummer: 26166156.5
(22) Anmeldetag: 19.03.2026
(51) Int. Cl.: B25J 21/00, B25J 15/04, B65B 3/00

(54) **HANDHABUNGSVORRICHTUNG FÜR ISOLATOR MIT EINER KOPPLUNGSSCHNITTSTELLE SOWIE ISOLATOR MIT EINER SOLCHEN HANDHABUNGSVORRICHTUNG**

(30) Priorität: 19.05.2025 DE 102025119389
(71) Anmelder: Syntegon Technology GmbH, 70372 Stuttgart (DE)
(72) Erfinder: Bäuerle, Johannes, 74423 Obersontheim (DE); Kleinert, Marcus, 74599 Wallhausen (DE)
(74) Vertreter: DREISS Patentanwälte PartG mbB

(57) **Zusammenfassung**

Die vorliegende Erfindung betrifft eine Handhabungsvorrichtung (10) mit einer Kopplungsschnittstelle, insbesondere zur Kopplung mit einem Füllnadelhalter, für einen Isolationsbereich, einen Isolator (2) und ein Verfahren für deren Betrieb.

## Beschreibung

Die vorliegende Erfindung betrifft eine Handhabungsvorrichtung mit einer Kopplungsschnittstelle, insbesondere zur Kopplung mit einem Füllnadelhalter, für einen Isolationsbereich, einen Isolator und ein Verfahren für deren Betrieb.

Ein Isolator grenzt einen, insbesondere sterilen oder desinfizierten, Isolationsbereich mit kontrollierter Atmosphäre von einer äußeren Umgebung, zum Beispiel einen Bedien- oder Antriebsbereich, ab. In solchen sterilen Isolationsbereichen werden, besonders in der pharmazeutischen Produktion, Füllnadeln eingesetzt, um Produkte, insbesondere pharmazeutische Produkte, abzufüllen. Dafür ist es notwendig, dass die Füllnadeln kontrolliert innerhalb von Isolationsbereichen zu bewegen, ohne dabei die Sterilität zu gefährden.

Aus dem Stand der Technik sind Handhabungsvorrichtungen bekannt, die Füllnadelhalter inklusive Füllnadeln aufnehmen, in dem sie eine Vertikalbewegung erzeugen. Über diese Vertikalbewegung können die Füllnadeln auch in das zu befüllende Behältnis ein- und ausgetaucht werden.

Andere Systeme arbeiten mit einem horizontalen Versatz und können Vertikal- und Horizontalbewegungen überlagern.

Bei bekannten Bauformen stellt sich das Problem, dass die Bewegungen, die über einen Bedienbereich mittels Durchführungen in den Isolationsbereich übertragen wird, über die Sterilitätsgrenze erfolgt, was eine Verletzung der Sterilitätsgrenze zur Folge haben kann, wenn Komponenten durch die Sterilitätsgrenze hin- und herbewegt werden. Üblicherweise wird versucht eine Kontaminationseinschleppung über Dichtungen oder Ähnliches zu vermeiden.

Der vorliegenden Erfindung liegt die Aufgabe zugrunde, eine vorteilhafte Möglichkeit zum Betrieb einer Handhabungsvorrichtung in einem Isolationsbereich bereitzustellen.

Die Aufgabe wird gelöst durch eine Handhabungsvorrichtung nach Anspruch 1, einen Isolator nach Anspruch 12 und ein Verfahren nach Anspruch 13 sowie nachfolgend beschriebenen Lösungen.

Erfindungsgemäß ist eine Handhabungsvorrichtung mit einer Kopplungsschnittstelle vorgesehen. Die Kopplungsschnittstelle dient bspw. zum Ankoppeln von Werkzeugen, insbesondere zur Kopplung mit einem Füllnadelhalter. Die Handhabungsvorrichtung ist für den Einsatz in einem Isolator vorgesehen, wobei der Isolator mit kontrollierter Atmosphäre ausgebildet ist, insbesondere eine sterile oder desinfizierte Atmosphäre.

Der Isolationsbereich ist durch eine Trennwand von einem, insbesondere nichtsterilen bzw. kontaminationsbelasteten, Antriebsbereich, insbesondere Bedienbereich, in dem sich insbesondere auch Personal befinden kann oder für dieses zugänglich ist, abgetrennt. Der Antriebsbereich kann auch gesondert gekapselt sein.

Die Handhabungsvorrichtung weist weiter einen Antriebsabschnitt mit wenigstens einem Antrieb, einen Übertragungsabschnitt und einen Manipulatorabschnitt auf. Der Übertragungsabschnitt ist ausgebildet, um eine Antriebsbewegung von dem Antrieb an den Manipulatorabschnitt zu übertragen.

Der Manipulatorabschnitt ist ausgebildet, um die Kopplungsschnittstelle relativ zu dem Übertragungsabschnitt zu bewegen. Der Übertragungsabschnitt ist derart ausgebildet, dass er sich in einem eingebauten Zustand durch die Trennwand des Isolators erstreckt. Im eingebauten Zustand befindet sich der Manipulatorabschnitt innerhalb des Isolationsbereichs und der Antriebabschnitt sich im Antriebsbereich, insbesondere Bedienbereich.

Der oder die Antriebe sind außerhalb des Isolators angeordnet, um zu vermeiden, dass sie Kontaminationen in der geschützten Umgebung abgeben, bspw. aufgrund von Abrieb beweglicher Teile.

Weiter ist erfindungsgemäß vorgesehen, dass der Übertragungsabschnitt wenigstens eine Übertragungswelle umfasst. Die Übertragungswelle überträgt die Antriebsbewegung von dem Antrieb an den Manipulatorabschnitt mittels einer Rotationsbewegung. Die Übertragungswelle überträgt die Antriebsbewegung translationsfrei. Es erfolgt also eine Übertragung ohne, dass ein Teil des Übertragungsabschnitts sich durch die Sterilitätsgrenze hindurch hin- und herbewegt. Bei einer Rotation bleibt die Übertragungswelle immer an der gleichen Stelle bezüglich der Sterilitätsgrenze. Mit anderen Worten kein Teil der Übertragungswelle bewegt sich von Antriebsbereich in den Isolationsbereich oder umgekehrt. Hierdurch wird die Sterilität des Isolationsbereiches besonders zuverlässig erhalten.

Der Manipulatorabschnitt der Handhabungsvorrichtung kann wenigstens zwei Armabschnitte umfassen. In einer bevorzugten Ausgestaltung ist der Manipulatorabschnitt mit wenigstens drei, insbesondere genau drei, Armabschnitten ausgebildet. Die Armabschnitte sind relativ zueinander bewegbar. Die Armabschnitte sind dabei bevorzugt über Schwenkgelenke miteinander gekoppelt.

Der Übertragungsabschnitt kann weiter mehrere, insbesondere eine je Armabschnitt, insbesondere drei konzentrisch zueinander angeordnete Übertragungswellen umfassen. Dabei können eine erste und eine zweite Übertragungswelle als Hohlwelle ausgebildet sein. Mit anderen Worten, die zweite und die dritte Übertragungswelle verlaufen innerhalb der jeweils hohlen ersten und zweiten Übertragungswelle.

Die Handhabungseinrichtung kann außerdem derart ausgebildet sein, dass die Antriebsbewegung von mindestens einer Übertragungswelle über einen Keilriemen (Keilriemen sind günstig jedoch schlupfbehaftet, was zu Abrieb und verringerter Genauigkeit führen kann, was je nach Anforderung jedoch in Kauf genommen werden oder durch angepasste Steuerung kompensiert werden kann), einen Zahnriemen, eine Steuerkette oder ein Kardangelenk an ein Schwenkgelenk des Manipulatorabschnitts übertragen wird. Keilriemen sind hierbei vorteilhaft, da sie eine große Flexibilität bieten und geringe Kosten verursachen und wartungsarm sind. Ferner können sie Vibrationen dämpfen, was ihren Einsatz besonders bei der Handhabung von empfindlichen Produkten vorteilhaft macht.

Zahnriemen sind günstig und haben nur ein geringes Gewicht, was insgesamt den Energieaufwand reduziert, den es erfordert, die Bewegung zu übertragen. Das Wartungsintervall ist bei diesem Bauteil gut vorhersagbar, was Planungssicherheit ermöglicht. Steuerketten sind deshalb vorteilhaft, weil sie im Vergleich langlebig, robust und deshalb wartungsarm sind.

Kardangelenke ermöglichen eine große Winkelkompensation, mit anderen Worten, sie erlauben zwischen den Armabschnitten eine Vielzahl unterschiedlicher Winkel, über die die Bewegung übertragen werden kann. Gleichzeitig sind Kardangelenke robust und wartungsarm. Vorteilhaft ist außerdem der Einsatz von Stirnrädern beziehungsweise eines Stirnradgetriebes.

Ein Antrieb wenigstens eines Armabschnitts, insbesondere der Antrieb eines Armabschnitts der über wenigstens einen anderen Armabschnitts mit dem Übertragungsabschnitt indirekt verbunden ist, kann in einem der Armabschnitte und/oder einem der Schwenkgelenke der Armabschnitte angeordnet sein.

Weiter kann die Handhabungsvorrichtung mindestens ein bewegliches Betätigungselement aufweisen, welches an der Kopplungsschnittstelle angeordnet ist. Das Betätigungselement ist dabei insbesondere derart ausgebildet, dass es bei Betätigung mittels einer Verriegelungsvorrichtung die Kopplungsschnittstelle mit einem gekoppelten Füllnadelhalter, insbesondere formschlüssig, verriegeln kann. Mit anderen Worten, die Betätigung des Betätigungselements führt zu einer stabileren und gesicherten Verbindung zwischen Füllnadelhalter und Kopplungsschnittstelle. Über das Betätigungselement ist die Verriegelungsvorrichtung betätigbar.

Die Handhabungsvorrichtung kann weiter derart ausgebildet sein, dass das Betätigungselement mit einem rotierbar in der Verriegelungseinheit gelagertem Verbindungsstück gekoppelt ist und das Verbindungsstück mit einem, insbesondere stiftartigem, Verriegelungselement verbunden ist. Das Verriegelungselement kann dabei durch eine Betätigung des Betätigungselements in einen Verriegelungsspalt, der sich an dem zu koppelnden Füllnadelhalter befindet, bewegt werden. Durch Eingriff in den Verriegelungsspalt verriegelt das Verriegelungselement den Füllnadelhalter an der Kopplungsschnittstelle.

Weiter kann die Handhabungsvorrichtung erfindungsgemäß so ausgebildet sein, dass sich der Verriegelungsspalt entlang seiner Erstreckung verjüngt, so dass das Verriegelungselement beim Verriegeln des Füllnadelhalters durch Eingriff in den Verriegelungsspalt den Füllnadelhalter in eine definierte Position drängt. Beispielsweise derart, dass das Verriegelungselement in den sich verjüngenden Spalt geklemmt wird.

Eine weitere erfindungsgemäße Ausgestaltung sieht vor, dass die Verriegelungsvorrichtung über eine Schwenkbewegung, insbesondere eine Schwenkbewegung um eine Kopplungsrichtung, des Betätigungselements betätigt wird. Hierbei erstreckt sich insbesondere ein Verbindungsstück, welches mit dem Betätigungselement verbunden ist, länglich in die Kopplungsrichtung, wobei die Kopplungsschnittstelle entlang der Kopplungsrichtung in eine entsprechende Aufnahme am Füllnadelhalter bewegbar ist.

Weiter ist eine mögliche Ausgestaltung, dass sich ein Anschlagsabschnitt zum Betätigen des Betätigungselements an dem Manipulatorabschnitt befindet, insbesondere an einem direkt mit dem Übertragungsabschnitt schwenkbar verbundenen Arm des Manipulatorabschnitts. Der Anschlagsabschnitt kann dabei insbesondere länglich oder stiftartig ausgebildet sein. Eine vorteilhafte Ausgestaltung sieht vor, dass der Anschlagabschnitt durch vertikales Rotieren und/oder durch vertikales Verfahren, der Arme das Betätigungselement betätigen kann.

Erfindungsgemäß ist außerdem eine Sachgesamtheit, die eine Handhabungsvorrichtung, wie hier beschrieben und einen mit der Kopplungsschnittstelle gekoppelten Füllnadelhalter umfasst, insbesondere wobei ein sich entlang der Kopplungsrichtung verjüngender Abschnitt der Kopplungsschnittstelle in einer entsprechenden Aufnahme des Füllnadelhalters angeordnet ist. Das Verriegelungselement der Kopplungsschnittstelle kann in dieser Ausgestaltung durch Eingriff in den Verriegelungsspalt den Füllnadelhalter mit der Kopplungsschnittstelle verriegeln, insbesondere wobei das Verriegelungselement durch eine Schwenkbewegung des Betätigungselements aus der verriegelnden Stellung bewegbar ist.

Teil der Erfindung ist auch ein Isolator mit einer Handhabungsvorrichtung oder der Sachgesamtheit aus Handhabungsvorrichtung und gekoppeltem Füllnadelhalter, wie eingangs oder nachfolgend in der Beschreibung oder den Ansprüchen definiert.

Dabei ist die Handhabungsvorrichtung mithilfe einer die Sterilität des Isolationsbereiches bewahrenden Durchführung in die Trennwand des Isolators eingesetzt, wobei der Manipulatorabschnitt und die Kopplungsschnittstelle im Isolationsbereich und der Antriebsabschnitt beziehungsweise die Antriebe im Bedienbereich angeordnet sind und der Übertragungsabschnitt sich durch die Trennwand vom Antriebsabschnitt zum Manipulatorabschnitt erstreckt. Mit anderen Worten, der Manipulatorabschnitt liegt innerhalb des Isolationsbereichs und der Antriebsabschnitt in einem möglicherweise unsterilen Antriebsbereich.

Teil der Erfindung ist auch ein Verfahren zum Betrieb einer Handhabungsvorrichtung wie hier beschrieben. Das Verfahren umfasst die Schritte:
a) Bewegen der Handhabungsvorrichtung zu einem Füllnadelhalter,
b) Kopplung des Füllnadelhalters mit der Kopplungsschnittstelle,
c) optional Bewegen des Betätigungselements an den Anschlagsabschnitt und Betätigen des Betätigungselements mittels des Anschlagsabschnitts, um die Kopplungsschnittstelle zu verriegeln. Verriegeln bedeutet hier, dass die Kopplungsschnittstelle und der Füllnadelhalter nicht ohne vorheriges Entriegeln, insbesondere durch ein Zurückbewegen des Betätigungselements in die ursprüngliche Position, getrennt werden können,
d) Bewegen des gekoppelten Füllnadelhalters in vertikaler und optional horizontaler Richtung zum Einsatzort.

Die Erfindung wird im Folgenden anhand der Figuren näher beschrieben, wobei gleiche oder funktional gleiche Elemente ggf. lediglich einmal mit Bezugszeichen versehen sind.
**Fig. 1** schematischer Überblick über Isolations- und Bedienbereich mit einer Handhabungsvorrichtung in eingebautem Zustand;
**Fig. 2** Übertragungswellen mit einer ersten und zweiten Übertragungswelle ausgebildet als Hohlwelle;
**Fig. 3** schematische Darstellung eines Manipulatorabschnitts mit einer Kopplungsschnittstelle;
**Fig. 4** perspektivische Darstellung von Antriebsbereich und Isolationsbereich mit der Handhabungsvorrichtung mit gekoppeltem Füllnadelhalter;
**Fig. 5** perspektivische Darstellung der Kopplungsschnittstelle mit gekoppeltem Füllnadelhalter;
**Fig. 6** Querschnitt durch Kopplungsschnittstelle mit gekoppeltem Füllnadelhalter;
**Fig. 7** Darstellung eines Manipulatorabschnitts mit an der Kopplungsschnittstelle gekoppeltem Füllnadelhalter an einem Einsatzort.

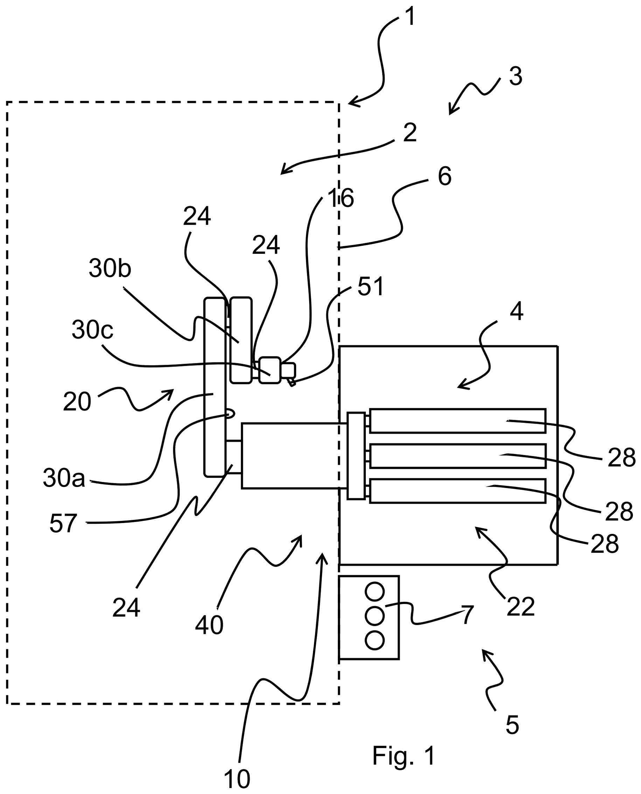

Figur 1 zeigt einen schematisch dargestellten Isolator 1. Der Isolator 1 trennt einen sterilen oder desinfizierten Isolationsbereich 2 mittels einer Trennwand (unterbrochene Linie) 6 von einer Umgebung 3, die einen Antriebsbereich 4 umfasst, der vorliegend in einem Bedienbereich 5 des Isolators 1 angeordnet ist. Im Bedienbereich 5 können bspw. Bedienelemente 7 zur Bedienung von Einrichtungen im Isolationsbereich 2 angeordnet sein.

Der Isolator 1 umfasst eine erfindungsgemäße Handhabungsvorrichtung 10. Figur 1 zeigt die erfindungsgemäße Handhabungsvorrichtung 10 in eingebautem Zustand. Die Handhabungsvorrichtung 10 umfasst einen Manipulatorabschnitt 20, einen Antriebabschnitt 22 und einen Übertragungsabschnitt 40. Der Manipulatorabschnitt 20 ist in dem Isolationsbereich 2 angeordnet. Der Antriebabschnitt 22 ist außerhalb des Isolationsbereichs 2 angeordnet, genauer gesagt in dem Antriebsbereich 4. Der Antriebsbereich 4 ist vorliegend nochmals selbst eingeschlossen jedoch durch die Trennwand 6 von dem Isolationsbereich 2 getrennt. Der Übertragungsabschnitt 40 verbindet den Antriebabschnitt 22 mit dem Manipulatorabschnitt 20. Der Übertragungsabschnitt 40 erstreckt sich hierfür durch die Trennwand 6 hindurch.

Der Antriebsabschnitt umfasst drei Antriebe 28. Der Manipulatorabschnitt 20 umfasst drei Armabschnitte 30a/30b/30c, die über Schwenkgelenke 24 miteinander beziehungsweise mit dem Übertragungsabschnitt 40 verbunden sind.

An einem ersten Armabschnitt 30a ist ein Anschlagsabschnitt 57 ausgebildet. Ein zweiter Armabschnitt 30b verbindet den ersten Armabschnitt 30a mit einem dritten Armabschnitt 30c. An dem dritten Armabschnitt 30c ist eine Kopplungsschnittstelle 16 angeordnet, an der ein Betätigungselement 51 angeordnet ist. Das Betätigungselement 51 ist in Figur 1 in einer unverriegelten Position gezeigt.

Durch Überlagerung der Schwenkbewegungen der drei Armabschnitte 30a/30b/30c ist es möglich sowohl horizontale als auch vertikale Bewegung mit der Kopplungsschnittstelle 16 auszuführen. Durch Bewegungen der Armabschnitte 30a/30b/30c ist weiter eine Betätigung des Betätigungselements 51 an dem Anschlagsabschnitt 57 ermöglicht.

Die Antriebsbewegung der Antriebe 28 kann über Übertragungswellen 42/44/46, die in dem Übertragungsabschnitt 40 angeordnet sind, von dem Antriebabschnitt 22 an den Manipulatorabschnitt 20 übertragen werden.

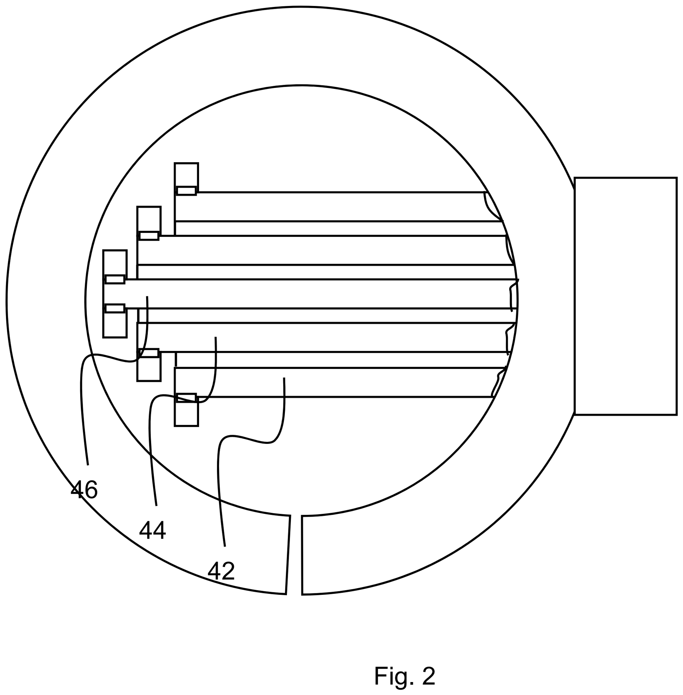

Figur 2 zeigt drei Übertragungswellen 42/44/46 in einem schematischen Querschnitt. Die erste Übertragungswelle 42 und die zweite Übertragungswelle 44 sind jeweils als Hohlwelle ausgebildet. Die zweite Übertragungswelle 44 ist in der ersten Übertragungswelle 42 und die dritte Übertragungswelle 46 in der zweiten Übertragungswelle 44 verlaufend angeordnet. Die Übertragungswellen 42/44/46 sind konzentrisch zueinander angeordnet.

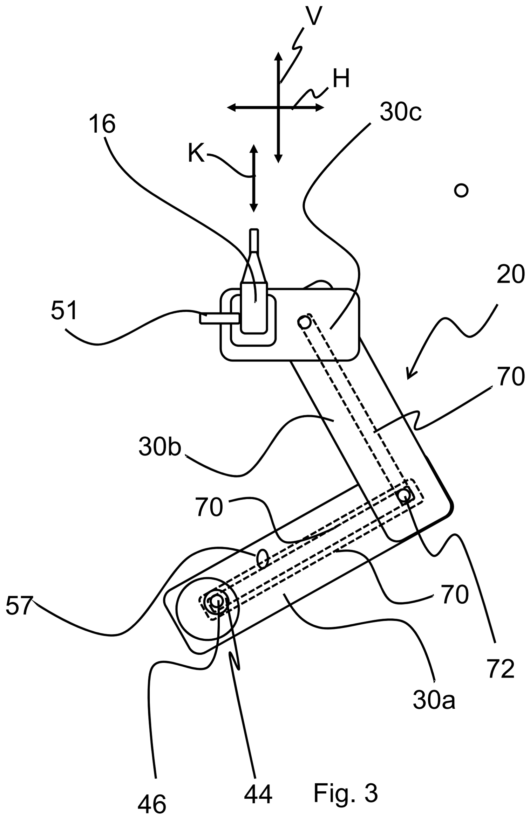

Figur 3 zeigt eine schematische Ansicht des Manipulatorabschnitts 20 in einem ausgefahrenen Zustand. Eine vertikale Richtung V und eine horizontale Richtung H sind durch entsprechende Achsen dargestellt. Durch Bewegung der Armabschnitte 30a/30b/30c zueinander kann eine horizontale und/oder vertikale Bewegung der Kopplungsschnittstelle 16 bewirkt werden. Die drei Armabschnitte 30a/30b/30c stehen in unterschiedlichen Winkeln zueinander. Das Betätigungselement 51 ist hier an der Kopplungsschnittstelle 16 angeordnet.

Der Anschlagsabschnitt 57 ist an Armabschnitt 30a angeordnet. Durch eine Bewegung der Armsegmente 30a/30b/30c gegeneinander, mit anderen Worten, durch eine Schwenkbewegung der einzelnen Armsegmente 30a/30b/30c jeweils entlang der Schwenkgelenke 24, kann das Betätigungselement 51 gegen den Anschlagsabschnitt 57 bewegt werden und damit das Betätigungselement 51 betätigt werden.

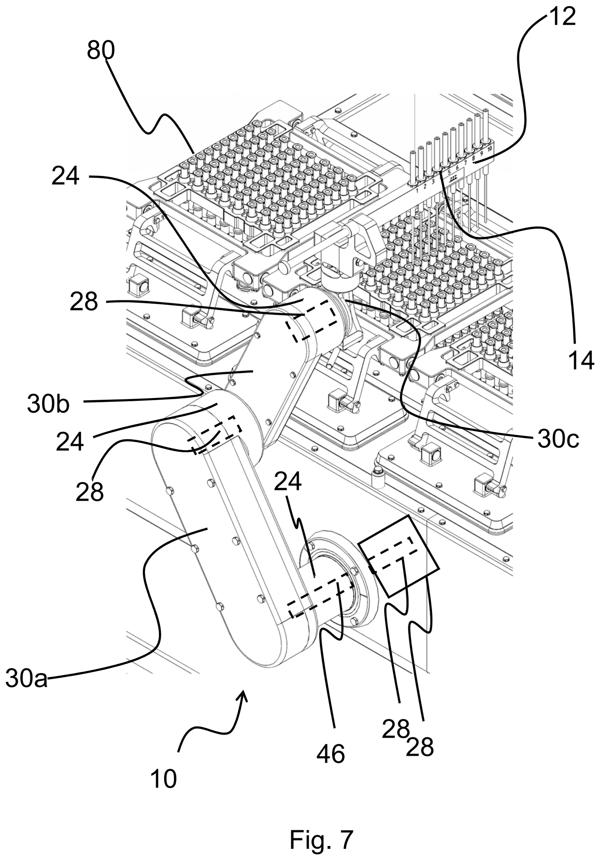

Im Beispiel von Figur 3 sind Keilriemen 70 gezeigt, die im inneren der Armsegmente 30a/30b/30c eingeschalt verlaufen und das Antriebsmoment der Antriebe 28 an die Gelenke übertragen. Um Moment an das Gelenk 24 des dritten Armsegments 30c zu übertragen werden zwei Keilriemen 70 verwendet, die über eine Kopplungsachse 72 im Gelenk 24 des zweiten Armsegments 30b gekoppelt sind. Andere Arten der Kopplung sind im Sinne der Erfindung möglich beispielsweise Zahnriemen, Steuerketten oder Kardangelenke. Alternativ kann, wie in Figur 7 illustriert der jeweilige Antrieb 28 des zweiten Armsegments 30b und des dritten Armsegments 30c auch in den Armsegmenten angeordnet sein. Die Antriebe 28 des zweiten Armsegments 30b und des dritten Armsegments 30c können leistungsschwächer und entsprechend kleiner als der Antrieb 28 des ersten Armsegment 30a ausgebildet sein, das direkt mit dem Übertragungsabschnitt 40 verbunden ist.

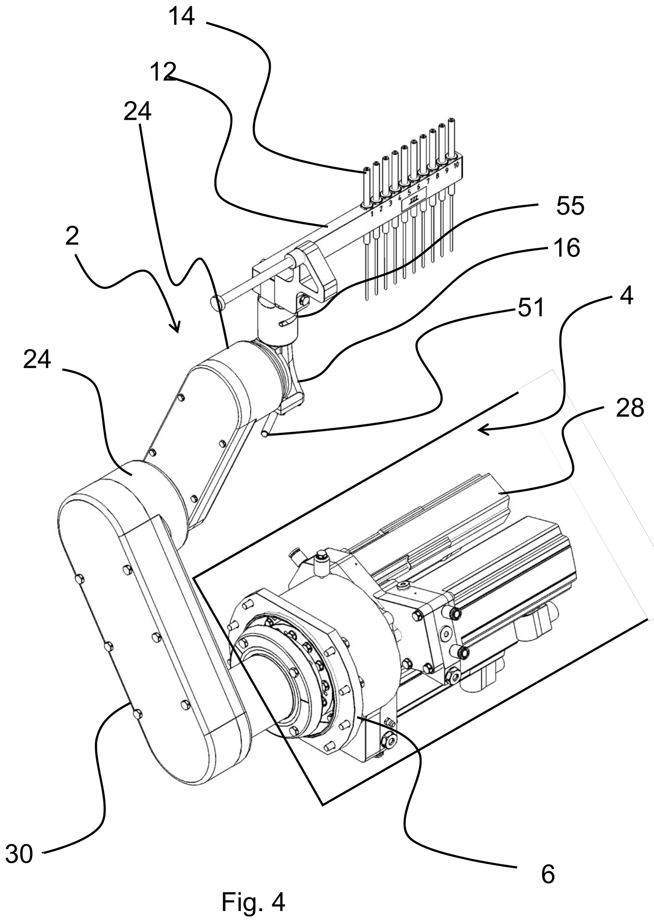

Figur 4 zeigt eine perspektivische Ansicht des Manipulatorabschnitts 20 im Isolationsbereich 2 und den Antriebsabschnitt im Antriebsbereich 4. Der Kopplungsschnittstelle 16 ist hier mit einem Füllnadelhalter 12 mit Füllnadeln 14 gekoppelt. Das Betätigungselement 51 ist in der verriegelten Stellung und verriegelt den Füllnadelhalter 12 mit der Kopplungsschnittstelle 16.

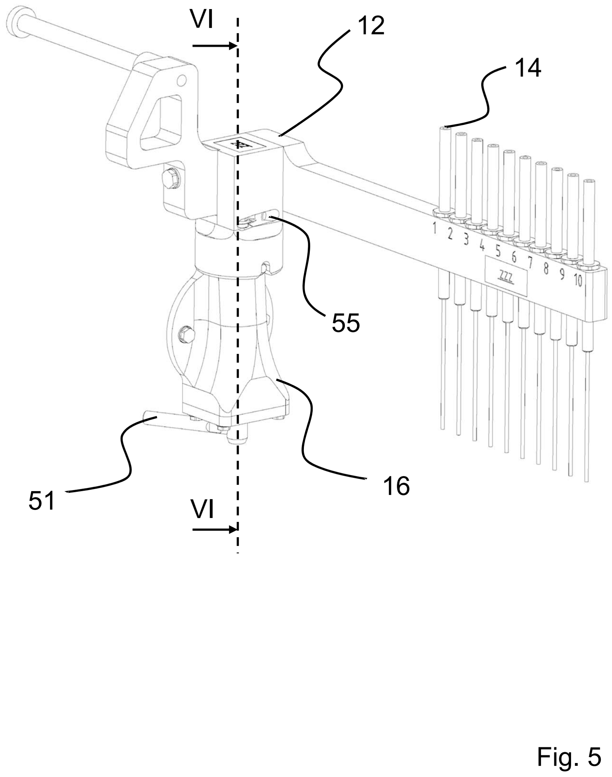

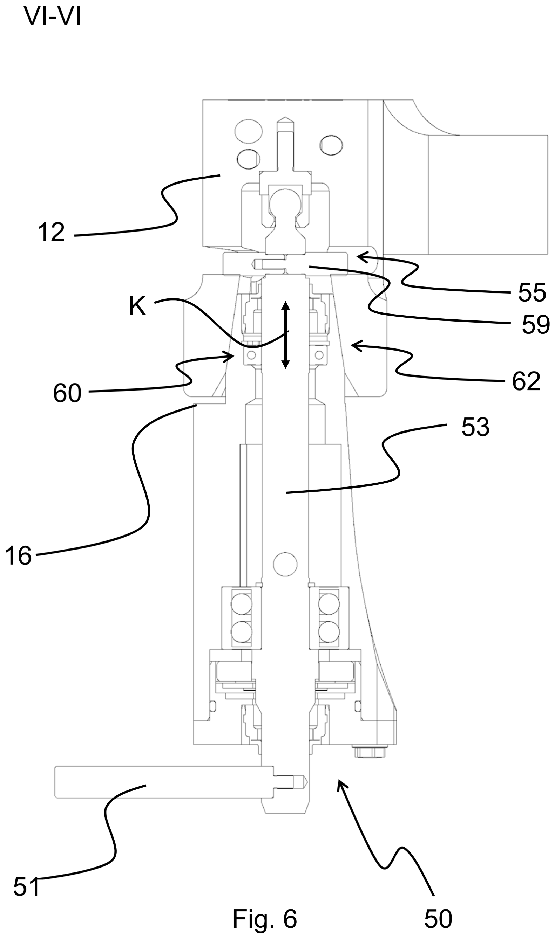

Figur 5 zeigt eine perspektivische Ansicht der Kopplungsschnittstelle 16 mit einem Füllnadelhalter 12 mit Füllnadeln 14. In Figur 6 ist eine Schnittdarstellung entlang der Linie VI-VI aus Figur 5 gezeigt. Eine Verriegelungseinrichtung 50 umfasst einen Verriegelungsspalt 55. Ein Verriegelungselement 59 der Verriegelungseinrichtung 50 kann durch Eingriff in den Verriegelungsspalt 55 den Füllnadelhalter 12 an der Kopplungsschnittstelle 16 verriegeln. Das Verriegelungselement 59 ist über das Betätigungselement 51 in den Verriegelungsspalt 55 einschwenkbar. Das Betätigungselement 51 ist über ein Verbindungsstück 53, das rotierbar in der Verriegelungseinrichtung 50 gelagert ist, mit dem Verriegelungselement 59 verbunden.

Das Verriegelungselement 59 und der Verriegelungsspalt 55 sind derart ausgebildet, dass das Verriegelungselement 59 beim Verriegeln des Füllnadelhalters 12 durch Eingriff in den Verriegelungsspalt 55 den Füllnadelhalter 12 in eine definierte Position drängt. Die Verriegelungsvorrichtung 50 ist über eine Schwenkbewegung des Betätigungselements 51 um eine Kopplungsrichtung K betätigbar. Die Kopplungsschnittstelle 16 ist entlang der Kopplungsrichtung K in eine entsprechende Aufnahme 62 am Füllnadelhalter 12 bewegbar.

Das Verbindungsstück 53 ist vorliegend länglich ausgebildet und in die Kopplungsrichtung K erstreckt.

Um die Kopplungsschnittstelle 16 mit dem Füllnadelhalter 12 zu koppeln wird ein sich entlang der Kopplungsrichtung K verjüngender Einführabschnitt 60 der Kopplungsschnittstelle 16 in einer entsprechenden Aufnahme 62 des Füllnadelhalters 12 angeordnet. Der Einführabschnitt 60 der Kopplungsschnittstelle 16 wird hierzu entlang der Kopplungsrichtung K durch eine Bewegung der Armsegmente 30a/30b/30c gegeneinander in die Aufnahme 62 des Füllnadelhalters 12 eingeführt.

In Figur 7 ist eine alternative Variante der Handhabungsvorrichtung 10 beim Abfüllen von Flüssigkeiten in genestete Behälter 80 gezeigt. Bei der Variante von Figur 7 weist der Manipulatorabschnitt 20 auch die 3 Armabschnitte 30a/30b/30c auf. Der Übertragungsabschnitt 40 umfasst jedoch nur eine Übertragungswelle 46, die ein Antriebsmoment von einem Antrieb 28 in dem Antriebabschnitt 22 in das Gelenk 24 des ersten Armabschnitts 30a überträgt. An den Gelenken 24 des zweiten Armsegments 30b und des dritten Armsegments 30c sind die Antriebe 28 in den Armsegmenten bzw. den Gelenken 24 angeordnet. Die Antriebe 28 des zweiten Armsegments 30b und des dritten Armsegments 30c können leistungsschwächer und entsprechend kleiner als der Antrieb 28 des ersten Armsegment 30a ausgebildet sein, das direkt mit dem Übertragungsabschnitt 40 verbunden ist. Dadurch wird eine Unterbringung im Gelenk 24 oder Armsegment 30 möglich. Die Antriebe 28 im Gelenk 24 oder Armsegment 30 sind eingekapselt, so dass sie keine Kontamination an den Isolationsbereich 2 abgeben können.

## Patentansprüche

1. Handhabungsvorrichtung (10) mit einer Kopplungsschnittstelle (16), insbesondere zur Kopplung mit einem Füllnadelhalter (12), für einen Isolator (1), wobei der Isolator ausgebildet ist mit einem sterilen oder desinfizierten Isolationsbereich (2), der durch eine Trennwand (6) von einem, insbesondere nichtsterilen, Antriebsbereich (4) getrennt ist, wobei die Handhabungsvorrichtung (10)
einen Antriebabschnitt (22) mit wenigstens einem Antrieb (12),
einen Übertragungsabschnitt (40) und
einen Manipulatorabschnitt (20) umfasst, wobei
der Übertragungsabschnitt (40) ausgebildet ist, um eine Antriebsbewegung von dem Antrieb (28) an den Manipulatorabschnitt (20) zu übertragen, und
der Manipulatorabschnitt (20) ausgebildet ist, um die Kopplungsschnittstelle (16) relativ zu dem Übertragungsabschnitt (40) zu bewegen, wobei
der Übertragungsabschnitt (40) derart ausgebildet ist, dass er sich in einem eingebauten Zustand durch die Trennwand (6) des Isolators (1) erstreckt, wobei
sich in dem eingebauten Zustand der Manipulatorabschnitt (20) innerhalb des Isolationsbereiches (2) befindet und
der Antriebsabschnitt (22) sich im Antriebsbereich (4) befindet,
**dadurch gekennzeichnet, dass**
der Übertragungsabschnitts (40) wenigstens eine Übertragungswelle (42/44/46) umfasst, wobei der Übertragungsabschnitts (40) das Übertragen der Antriebsbewegung von dem Antrieb (28) an den Manipulatorabschnitt (20) mittels einer Rotationsbewegung wenigstens einer Übertragungswelle (42/44/46) des Übertragungsabschnitts (40) erfolgt,
wobei
die Übertragungswelle (42/44/46) die Antriebsbewegung translationsfrei überträgt.

2. Handhabungsvorrichtung (10) nach Anspruch 1, **dadurch gekennzeichnet, dass** der Manipulatorabschnitt (20) mit wenigstens zwei, insbesondere drei, Armabschnitten (30a/30b/30c), insbesondere die über Schwenkgelenke (24) miteinander gekoppelt sind, ausgebildet ist.

3. Handhabungsvorrichtung (10) nach Anspruch 2, **dadurch gekennzeichnet, dass** ein Antrieb (28) wenigstens eines Armabschnitts (30b/30c), insbesondere der über wenigstens einen anderen Armabschnitts (30a) mit dem Übertragungsabschnitt (40) indirekt verbunden ist, in einem der Armabschnitte (30a/30b/30c) und/oder einem von deren Schwenkgelenken (24) angeordnet ist.

4. Handhabungsvorrichtung (10) nach einem der voranstehenden Ansprüche, **dadurch gekennzeichnet, dass** der Übertragungsabschnitt (40) wenigstens drei konzentrisch zueinander angeordnete Übertragungswellen (42/44/46) umfasst, wobei eine erste (42) und eine zweite Übertragungswelle (44) als Hohlwelle ausgebildet sind.

5. Handhabungsvorrichtung (10) nach einem der voranstehenden Ansprüche, **dadurch gekennzeichnet, dass** die Antriebsbewegung von wenigstens einer Übertragungswelle (44, 46) über einen Keilriemen (70), einen Zahnriemen, eine Steuerkette oder ein Kardangelenk an ein Schwenkgelenk (24) des Manipulatorabschnitts (20) übertragen wird.

6. Handhabungsvorrichtung (10) nach einem der voranstehenden Ansprüche, **dadurch gekennzeichnet, dass** an der Kopplungsschnittstelle (16) mindestens ein bewegliches Betätigungselement (51) angeordnet ist, wobei das Betätigungselement (51) bei Betätigung einen gekoppelten Füllnadelhalter (12) durch eine Verriegelungsvorrichtung (50), insbesondere formschlüssig, verriegeln kann.

7. Handhabungsvorrichtung (10) nach Anspruch 6, **dadurch gekennzeichnet, dass** das Betätigungselement (51) mit einem rotierbar in der Verriegelungseinrichtung (50) gelagerten Verbindungsstück (53) gekoppelt ist und das Verbindungsstück (53) mit einem, insbesondere stiftartigen, Verriegelungselement (59) verbunden ist, wobei das Verriegelungselement (59) durch eine Betätigung des Betätigungselements (51) in einen Verriegelungsspalt (55) des zu koppelnden Füllnadelhalter (12) bewegt werden kann, sodass das Verriegelungselement (59) durch Eingriff in den Verriegelungsspalt (55) den Füllnadelhalter (12) an der Kopplungsschnittstelle (16) verriegelt.

8. Handhabungsvorrichtung (10) nach Anspruch 7, **dadurch gekennzeichnet, dass** sich der Verriegelungsspalt (55) entlang seiner Erstreckung verjüngt, so dass das Verriegelungselement (59) beim Verriegeln des Füllnadelhalter (12) durch Eingriff in den Verriegelungsspalt (55) den Füllnadelhalter (12) in eine definierte Position drängt.

9. Handhabungsvorrichtung (10) nach Anspruch 8, **dadurch gekennzeichnet, dass** die Verriegelungsvorrichtung (50) über eine Schwenkbewegung des Betätigungselements (51), insbesondere eine Schwenkbewegung um eine Kopplungsrichtung (K), betätigt wird, insbesondere wobei sich ein Verbindungsstück (53) länglich in die Kopplungsrichtung (K) erstreckt, wobei die Kopplungsschnittstelle (16) entlang der Kopplungsrichtung (K) in eine entsprechende Aufnahme am Füllnadelhalter (12) bewegbar ist.

10. Handhabungsvorrichtung (10) nach einem der Ansprüche 6 bis 9, **dadurch gekennzeichnet, dass** sich ein Anschlagsabschnitt (57) zum Betätigen des Betätigungselements (51) an dem Manipulatorabschnitt (20) befindet, insbesondere an einem direkt mit dem Übertragungsabschnitts (40) schwenkbar verbundenen Armabschnitt (30a) des Manipulatorabschnitts (20).

11. Handhabungsvorrichtung (10) nach einem der voranstehenden Ansprüche mit einem Füllnadelhalter (12), der mit der Kopplungsschnittstelle (16) gekoppelt ist, insbesondere wobei ein sich entlang der Kopplungsrichtung verjüngender Einführabschnitt (60) der Kopplungsschnittstelle (16) ein einer entsprechenden Aufnahme (62) des Füllnadelhalters angeordnet ist und das Verriegelungselement (59) der Kopplungsschnittstelle (16) durch Eingriff in den Verriegelungsspalt (55) den Füllnadelhalter (12) mit der Kopplungsschnittstelle (16) verriegelt, insbesondere wobei das Verriegelungselement (59) durch eine Schwenkbewegung des Betätigungselements (51) aus der verriegelnden Stellung bewegbar ist.

12. Isolator (1) mit Handhabungsvorrichtung (10) nach einem der Ansprüche 1 bis 11, **dadurch gekennzeichnet, dass** die Handhabungsvorrichtung (10) mithilfe einer die Sterilität des Isolationsbereiches (2) bewahrenden Durchführung in die Trennwand (6) des Isolators (1) eingesetzt ist, wobei der Manipulatorabschnitt (20) und die Kopplungsschnittstelle (16) im Isolationsbereich (2) und die Antriebe (28) im Bedienbereich (5) angeordnet sind und der Übertragungsabschnitt (40) sich durch die Trennwand (6) von den Antrieben (28) zum Manipulatorabschnitt (20) erstreckt.

13. Verfahren zum Betrieb einer Handhabungsvorrichtung (10) nach einem der vorherigen Ansprüche, umfassend die Schritte
a) Bewegen der Handhabungsvorrichtung (10) zu einem Füllnadelhalter (12),
b) Kopplung des Füllnadelhalters (12) mit der Kopplungsschnittstelle (16), insbesondere durch eine Bewegung der Kopplungsschnittstelle (16) entlang der Kopplungsrichtung (K), insbesondere wobei die Kopplungsrichtung (K) in vertikaler Richtung (V) verläuft,
c) Optional Bewegen des Betätigungselements (51) an den Anschlagsabschnitt (57) und Betätigen des Betätigungselement (51) mittels des Anschlagsabschnitts (57), um die Kopplungsschnittstelle (16) zu verriegeln,
d) Bewegen des gekoppelten Füllnadelhalters (12) in vertikaler (V) und/oder horizontaler Richtung (H) zu einem Einsatzort.
